**Europäisches Patentamt**

(19) **European Patent Office**

**Office européen des brevets**

(11) Veröffentlichungsnummer: **0 177 620**
**B1**

(12) **EUROPÄISCHE PATENTSCHRIFT**

(45) Veröffentlichungstag der Patentschrift:
02.11.88

(51) Int. Cl.⁴: **F 16 K 31/122,** F 15 B 15/22

(21) Anmeldenummer: **84103595.9**

(22) Anmeldetag: **31.03.84**

(54) **Druckmediumbetätigtes Ventil.**

(30) Priorität: **26.01.84 CH 359/84**

(43) Veröffentlichungstag der Anmeldung:
**16.04.86 Patentblatt 86/16**

(45) Bekanntmachung des Hinweises auf die Patenterteilung:
**02.11.88 Patentblatt 88/44**

(84) Benannte Vertragsstaaten:
**BE DE FR GB SE**

(56) Entgegenhaltungen:
**CH-A-528 693**
**DD-A-203 102**
**DE-A-2 355 593**
**DE-A-2 830 416**
**US-A-4 393 751**

(73) Patentinhaber: **GEBRÜDER SULZER
AKTIENGESELLSCHAFT,** Zürcherstrasse 9, CH-
**8401 Winterthur (CH)**

(72) Erfinder: **Grotloh, Karlheinz, Im Morgentau 33d,
CH- 8408 Winterthur (CH)**

(74) Vertreter: **Dipl.- Ing. H. Marsch Dipl.- Ing. K.
Sparing Dipl.- Phys.Dr. W.H. Röhl
Patentanwälte, Rethelstrasse 123, D-4000
Düsseldorf (DE)**

### Beschreibung

Die Erfindung bezieht sich auf ein druckmediumbetätigtes Ventil gemäss dem Oberbegriff des Anspruchs 1.

Bei einem bekannten Ventil dieser Art (CH-A-528 693) ist es möglich, dass das aus dem Servokolben, der Stange und dem Verschlussteil bestehende bewegliche System mit grosser Geschwindigkeit in den beiden Endstellungen auf die entsprechende Gegenfläche im Gehäuse auftrifft, was Beschädigungen am Ventil zur Folge haben kann. Weiterhin ist es auch möglich, dass bei einer Schliessbewegung, die mit grosser Geschwindigkeit stattfindet, Druckwellen in dem Druckmedium auftreten, das sich in der am Ventil anschliessenden Rohrleitung befindet, welche Druckwellen zu Schäden an der Rohrleitung führen können.

Der Erfindung liegt die Aufgabe zugrunde, ein Ventil der eingangs genannten Art so zu verbessern, dass vermieden wird, dass das bewegliche System mit zu grosser Geschwindigkeit in den beiden Endstellungen auf die zugehörige Gegenfläche auftrifft.

Diese Aufgabe wird erfindungsgemäss durch die Merkmale des Kennzeichens des Anspruchs 1 gelöst.

Durch die neue Anordnung der dritten Verbindungsleitung wird es möglich, den Verschlussteil relativ rasch in jede der beiden Endstellungen zu bewegen und trotzdem ein heftiges Aufschlagen auf die zugehörige Endfläche zu vermeiden, weil das bewegliche System bis kurz vor Erreichen der Endfläche zunehmend gebremst wird und dann mit genügend niedriger und etwa gleichbleibender Geschwindigkeit sich bis zur Endstellung bewegt. Von besonderem Vorteil ist, dass diese Wirkung erreicht wird, ohne dass zusätzliche bewegliche Teile, also z. B. Ventile, benötigt werden. Die erfindungsgemässe dritte Verbindungsleitung lässt sich auch mit relativ geringem Aufwand nachträglich an bestehende Ventile anbringen.

Aus der DD-A-203 102 ist eine Vorrichtung zum Abbremsen eines pneumatisch oder hydraulisch bewegten Kolbens bekannt, dessen Zylinder am einen Ende mit einem Einlaßstutzen und an seinem anderen Ende mit einem Auslaßstutzen für das hydraulische oder pneumatische Druckmittel versehen ist. Ausserdem hat der Zylinder einen zweiten Auslaßstutzen, der vom Zylinder zwischen dem Einlaßstutzen und dem zuerstgenannten Auslaßstutzen abzweigt und in diesen einmündet. Hinter dieser Einmündung, d.h. im gemeinsamen Auslaßstutzen, ist eine einstellbare Drossel angebracht. Beim Zuführen von Druckmittel über den Einlaßstutzen bewegt sich der Kolben in Richtung der beiden Auslaßstutzen, wobei zunächst Medium aus dem sich verkleinernden Zylinderraum über beide Austrittsstutzen entweicht. Wenn der Kolben im Laufe seiner Bewegung den zweiten Auslaßstutzen passiert hat, gelangt Druckmittel aus dem sich vergrössernden Zylinderraum in den zweiten Auslassstutzen, von wo aus ein Teil des Druckmittels über den zuerstgenannten Auslaßstutzen in den sich verkleinernden Zylinderraum strömt, wodurch die Bremswirkung zustandekommt, während der andere Teil des Druckmittels über die Drosselstelle entweicht.

Ein Ausführungsbeispiel der Erfindung ist in der folgenden Beschreibung anhand der Zeichnung näher erläutert. Es zeigen in schematischer Form:

Fig.1 ein druckmediumbetätigtes Ventil nach der Erfindung, im Schnitt und in Arbeitsstellung und

Fig. 2 einen Ausschnitt des Ventils nach Fig. 1 in Sicherheitsstellung.

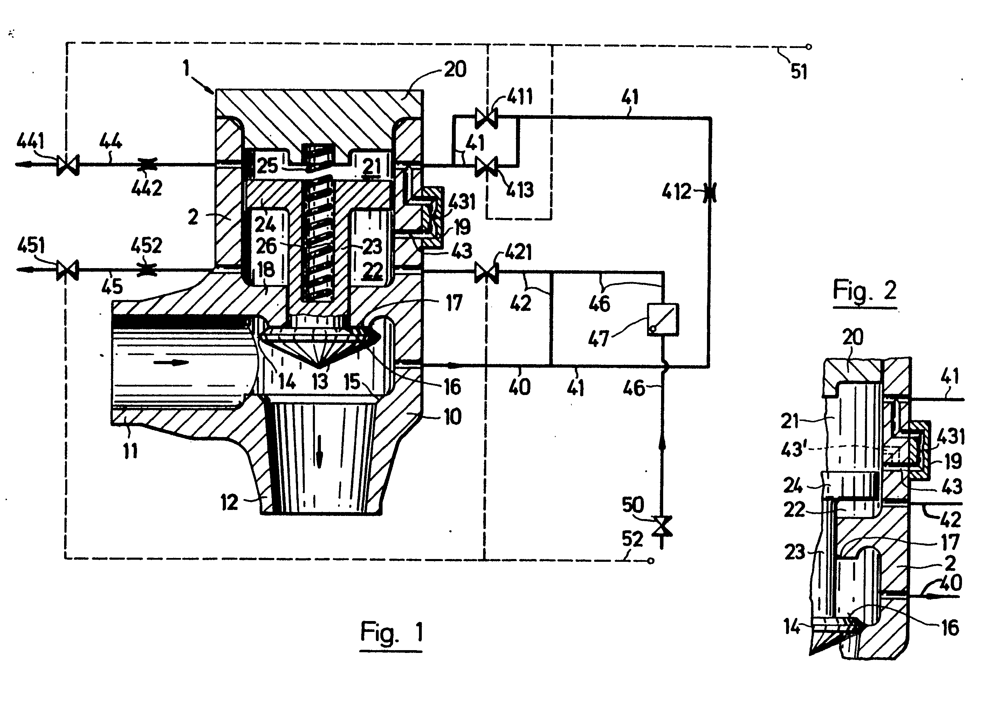

Die in Fig. 1 gewählte Darstellung dient zur vereinfachten Erläuterung, denn bei der praktischen Ausführung des Ventils können alle Steuer- und Rückschlagventile sowie die Leitungen mit den Drosselstellen innerhalb der Kontur des Ventiles enthalten sein.

Nach Fig. 1 weist ein Ventil 1 ein Gehäuse 10 und einen Deckel 20 auf, der mittels nicht gezeichneter Schrauben am Gehäuse 10 dicht befestigt ist. Druckmedium aus einer nicht gezeigten Druckmittelquelle strömt über einen Eintrittsstutzen 11 dem Gehäuse 10 zu und verlässt das Ventil über einen Austrittsstutzen 12. Ein Verschlussteil 13 ist bewegbar im Druckbereich des Eintrittsstutzens 11 angeordnet und weist auf der dem Austrittsstutzen 12 zugewandten Seite eine konisch ausgebildete Dichtfläche 14 auf, die beim Schliessen des Ventils 1 auf einen Dichtsitz 15 im Gehäuse 10 zu liegen kommt. Auf der dem Austrittsstutzen 12 abgewandten Seite des Verschlussteils 13 weist dieser einen Rücksitz 16 auf, der in der ganz offenen Stellung des Verschlussteils 13 an einer Anschlagfläche 17 im Gehäuse 10 dicht anliegt.

Das Gehäuse 10 weist einen Zylinder 2 auf, der sich gegen den Deckel 20 hin erstreckt und in dem ein Servokolben 24 bewegbar angeordnet ist. Der Kolben 24 ist mittels einer Stange 23 mit dem Verschlussteil 13 fest verbunden und unterteilt den vom Zylinder 2 umschlossenen Raum in einen ersten Kolbenraum 21 und einen zweiten Kolbenraum 22. Die Stange 23 durchstösst einen Zylinderboden 18, der den zweiten Kolbenraum vom Druckbereich des Eintrittsstutzens 11 in jeder Stellung des Verschlussteils 13 trennt. Im Boden 18 sind nicht gezeichnete, die Stange 23 umgebende Dichtungsmittel vorgesehen.

Im ersten Kolbenraum 21 ist eine Schraubendruckfeder 25 vorgesehen, die sich zwischen dem Deckel 20 und dem Boden einer Bohrung 26 abstützt, die durch den Kolben 24 hindurch bis in die Stange 23 hineinreicht.

Der Druck im Druckbereich des Eintrittsstutzens 11 wird auf eine am Gehäuse 10 angeschlossene Verteilleitung 40 übertragen. Die Verteilleitung 40 ist mittels einer ersten Verbindungsleitung 41 mit dem ersten Kolbenraum 21 und mittels einer zweiten Verbindungsleitung 42 mit dem zweiten Kolbenraum 22 verbunden.

Über eine ein Magnetsteuerventil 441 enthaltende Entlastungsleitung 44 ist der erste Kolbenraum 21 mit einer Druckmittelsenke, hier der Atmosphäre, verbunden. Zwischen dem Steuerventil 441 und dem ersten Kolbenraum 21 weist die Entlastungsleitung 44 eine Drosselstelle 442 auf. Der zweite Kolbenraum 22 ist über eine Entlastungsleitung 45 mit einer Druckmittelsenke, hier ebenfalls der Atmosphäre, verbunden. Die Entlastungsleitung 45 weist ein Magnetsteuerventil 451 auf.

Die erste Verbindungsleitung 41 enthält zwei parallelgeschaltete Magnetsteuerventile 411 und 413 sowie eine Drosselstelle 412. Die zweite Verbindungsleitung 42 weist ein Magnetsteuerventil 421 auf. An die zweite Verbindungsleitung 42 ist über ein Rückschlagventil 47 eine Fremdmediumleitung 46 angeschlossen.

Vom zylinderseitigen Ende der beiden Steuerventile 411 und 413 ausgehend bis zum zylinderseitigen Ende des Steuerventils 441 erstreckt sich ein Hohlraumabschnitt, der also den ersten Kolbenraum 21 sowie das Innere der an diesem Kolbenraum angeschlossenen Leitungen 41 und 44 umfasst. An diesen Hohlraumabschnitt ist eine dritte Verbindungsleitung 43 angeschlossen, die beim gezeichneten Ausführungsbeispiel sich zum grössten Teil durch die Wand des Zylinders 2 erstreckt. Das andere, in Fig. 1 untere Ende der dritten Verbindungsleitung 43 mündet - wenn der Kolben 24 seine Arbeitsstellung innehat - in den zweiten Kolbenraum 22, wogegen diese Mündungsstelle dann - wenn der Kolben 24 seine Sicherheitsstellung innehat - im ersten Kolbenraum liegt, wie dies in Fig. 2 dargestellt ist. Die dritte Verbindungsleitung 43 weist auch eine Drosselstelle 431 auf, die in einem Wandteil 19 ausgebildet ist, der von aussen am Zylinder 2 mittels nicht näher dargestellter Schrauben lösbar befestigt ist. Dies erlaubt ein leichtes Auswechseln der Drossel.

Abweichend von dem gezeichneten Ausführungsbeispiel kann das an dem Hohlraumabschnitt angeschlossene Ende der dritten Verbindungsleitung 43 auch in die erste Verbindungsleitung 41 oder in die erste Entlastungsleitung 44 münden, sofern diese Mündungsstellen zylinderseitig der Steuerventile 411 und 413 bzw. 441 liegen.

Die Magnetsteuerventile 441, 411 und 413 werden gleichzeitig durch eine einzige Steuerleitung 51 betätigt, wobei bei stromloser Leitung 51 das Magnetsteuerventil 441 geschlossen ist und die Magnetsteuerventile 411 und 413 offen sind. Die Magnetsteuerventile 451 und 421 werden ebenfalls durch eine einzige Steuerleitung 52 simultan betätigt, indem bei stromloser Leitung 52 das Magnetsteuerventil 451 offen bzw. das Magnetsteuerventil 421 geschlossen ist.

Das Ventil 1 funktioniert wie folgt:

Bei offenem Ventil 1 ( = Arbeitsstellung) strömt aus der Druckmittelquelle, z. B. einem Dampferzeuger, Druckmedium über den Eintrittsstutzen 11 in das Gehäuse 10 und verlässt dieses über den Austrittsstutzen 12. Im Normalbetrieb stehen die Magnetsteuerventile 441, 411 und 413 über die Steuerleitung 51 unter Strom, so dass das Magnetsteuerventil 441 offen ist und die Magnetsteuerventile 411 und 413 geschlossen sind. Die Steuerleitung 52 ist dagegen im Normalbetrieb stromlos und somit sind das Magnetsteuerventil 451 offen und das Magnetsteuerventil 421 geschlossen. Der erste Kolbenraum 21 ist dabei über das offene Magnetsteuerventil 441, die Drosselstelle 442 und die Entlastungsleitung 44 mit der Atmosphäre verbunden, ebenso wie der zweite Kolbenraum 22 wegen des offenen Magnetsteuerventils 451 in der Entlastungsleitung 45. Infolgedessen wirkt keine Druckdifferenz auf den Kolben 24; die resultierende Kraft aus dem Produkt aus dem atmosphärischen Druck mal die unterschiedlichen Kolbenoberflächen in den beiden Kolbenräumen 21 und 22 ist vernachlässigbar klein. Demgegenüber ist die resultierende Kraft aus dem Produkt aus dem Mediumdruck mal die Differenz der beiden Stirnflächen des Verschlussteils 13 gross genug, um den Verschlussteil gegen die Kraft der Schraubendruckfeder 25 in Offenstellung zu halten, wobei der Rücksitz 16 gegen die Anschlagfläche 17 dicht angepresst wird.

In der Verteilleitung 40, den Verbindungsleitungen 41 und 42 herrscht bis zu den Magnetsteuerventilen 411, 413 und 421 hin annähernd der gleiche Mediumdruck wie im Eintrittsstutzen 11. Die Fremdmediumleitung 46 ist drucklos, weil ein Ventil 50 in dieser Leitung die Zufuhr von Fremdmedium absperrt.

Das Schliessen des Ventils 1 wird entweder vom Betriebspersonal oder automatisch durch einen Störfall in der Anlage ausgelöst, wobei der Strom in der Steuerleitung 51 abgeschaltet wird. Dadurch schliesst das Magnetsteuerventil 441, und die Magnetsteuerventile 411 und 413 öffnen. In einem Bruchteil von einer Sekunde, der vom Querschnitt der Drosselstelle 412 abhängig ist, strömt Druckmedium über die Leitungen 40 und 41 in den ersten Kolbenraum 21. Dadurch wird der Kolben 24 zusammen mit der Stange 23 und dem Verschlussteil 13 nach unten verschoben, d.h. in Richtung der Schliess- oder Sicherheitsstellung. Dabei wirkt zunächst der volle Druck des Druckmittels im ersten Kolbenraum 21 auf den Kolben 24, während dieser Druck wegen der Drosselstelle 431 in der dritten Verbindungsleitung 43 noch nicht im zweiten Kolbenraum 22 wirksam ist. Der Kolben 24 bewegt sich also zuerst sehr rasch abwärts, wobei sich der zweite Kolbenraum 22 verkleinert und sich in diesem ein Druck einstellt, der zwischen dem Druck im ersten Kolbenraum und dem Atmosphärendruck liegt. Etwas Druckmedium entweicht ülber die Entlastungsleitung 45. Im Laufe der anfänglichen Bewegung des Kolbens 24 dringt auch Druckmittel über die dritte Verbindungsleitung 43 in den zweiten Kolbenraum 22, sodass sich der Druck in diesem Kolbenraum noch etwas erhöht. Durch diese Druckerhöhung wird die Kolbenbewegung anfänglich leicht und dann zunehmend gebremst. Die Bremswirkung wird durch die Dimensionierung der Querschnitte der Drosselstellen 431 und 452 bestimmt. Im Laufe der weiteren Abwärtsbewegung des Kolbens 24 wird von diesem die Mündungsstelle der dritten Verbindungsleitung überdeckt, wodurch die Zufuhr des Druckmediums vom ersten Kolbenraum 21 zum zweiten Kolbenraum 22 unterbunden wird. Dies hat zur Folge, dass die zunehmende Bremswirkung aufhört und der Kolben 24 dann sich mit etwa gleichbleibender Geschwindigkeit weiterbewegt, d.h. dass der Verschlussteil 13 sich ebenfalls mit dieser Geschwindigkeit auf die Sitzfläche 15 im Gehäuse 10 zubewegt. Der Verschlussteil 13 setzt also auf die Sitzfläche 15 auf, ohne dass an dieser Sitzfläche oder an der Dichtfläche 14 Schäden auftreten können.

Durch die Anordnung der dritten Verbindungsleitung 13 wird auch vermieden, dass nach dem ersten Aufsetzen des Verschlussteils 13 auf der Sitzfläche 15 der Druck im zweiten Kolbenraum 22 steigt und sich der Verschlussteil einmal oder mehrere Male ungewollt von der Sitzfläche abhebt. Ausserdem tritt in der Sicherheitsstellung des Verschlussteils keine Leckage von Druckmittel aus der ersten Verbindungsleitung 41 über die dritte Verbindungsleitung 43 zur Entlastungsleitung 45 auf.

Wird nun die Steuerleitung 51 wieder unter Strom gesetzt, so öffnet das Magnetsteuerventil 441, und es schliessen die Magnetsteuerventile 411 und 413, so dass der Druck im ersten Kolbenraum 21 auf Atmosphärendruck sinkt. Gleichzeitig mit der Stromzufuhr zur Leitung 51 wird auch die Steuerleitung 52 unter Strom gesetzt, so dass das Magnetsteuerventil 451 schliesst und das Magnetsteuerventil 421 öffnet. Damit gelangt Druckmedium in den zweiten Kolbenraum 22, wodurch eine Bewegung des Verschlussteils 13 in Öffnungsrichtung eingeleitet wird.

Auch bei dieser Öffnungsbewegung tritt eine Bremswirkung auf das bewegliche System auf, und zwar nachdem der Kolben 24 die Mündungsstelle der dritten Verbindungsleitung passiert hat. Es gelangt dann unter hohem Druck befindliches Druckmittel aus dem zweiten Kolbenraum 22 über die dritte Verbindungsleitung in den ersten Kolbenraum 21, so dass gegen Ende der Aufwärtsbewegung des Kolbens 24 eine Bremswirkung ausgeübt wird und der Verschlussteil 13 gedämpft an der Anschlagfläche 17 zur Anlage kommt. Auch bei dieser Bewegung des beweglichen Systems wird die Bremswirkung durch die Dimensionierung des Querschnitts der Drosselstelle 442 relativ zum Querschnitt der Drosselstelle 431 bestimmt.

Nach Erreichen der Offenstellung wird die Steuerleitung 52 wieder stromlos, so dass das Magnetsteuerventil 451 öffnet und das Magnetsteuerventil 421 schliesst. Damit sind die Normalbetriebsbedingungen wieder hergestellt.

Die Drosselstelle 442 hat die wichtige Aufgabe, bei Ausfall und sogar totaler Zerstörung des Magnetsteuerventils 441, das Schliessen und Geschlossenhalten des Ventils 1 zu ermöglichen, indem sie eine Druckstauung im ersten Kolbenraum 21 unter ständiger Nachfüllung von Druckmedium über die dann geöffneten Magnetsteuerventile 411 und 413 gestattet.

Abweichend von der Ausführungsform nach Fig. 1 ist in Fig. 2 noch mit gestrichelten Linien angedeutet, dass das andere Ende der dritten Verbindungsleitung 43 in zwei parallelgeschaltete Zweige geteilt ist, wobei auch die Mündung des parallelen Zweiges in der Sicherheitsstellung des Kolbens in den ersten Kolbenraum mündet. Der zweite Zweig ist in Fig. 2 mit 43' bezeichnet. Durch den zusätzlichen Zweig 43' wird die Gefahr von Verstopfungen der dritten Verbindungsleitung verringert und damit die Zuverlässigkeit des Ventils erhöht.

Aus Sicherheitsgründen können verschiedene Redundanzen am Ventil 1 vorgesehen werden. In der Ausführungsform nach Fig. 1 sind nur die parallelgeschalteten Magnetsteuerventile 411 und 413 als Beispiel einer solchen Redundanz vorhanden, weil dort die Sicherheitsanforderungen besonders gross sind. Je nach Bedarf und Raumverhältnissen können aber weitere Redundanzen vorgesehen werden, z. B. auch zwei parallele Schraubendruckfedern 25.

**Patentansprüche**

1. Druckmediumbetätigtes Ventil (1) mit einem Gehäuse (10), das einen mit einer Druckmittelquelle verbundenen Eintrittsstutzen (11), einen Austrittsstutzen (12) und einen vom durchströmten Ventilraum abgeschirmten Zylinder (2) aufweist, mit einem im Druckbereich des Eintrittsstutzens (11) angeordneten Verschlussteil (13), der mittels einer Stange (23) mit einem im Zylinder (2) verschiebbar angeordneten Kolben (24) verbunden ist, wobei der Kolben (24) den Zylinder (2) in einen beim Übergang von einer Arbeits- in eine Sicherheitsstellung sich vergrössernden, ersten Kolbenraum (21) und einen beim Übergang von der Arbeits- in die Sicherheitsstellung sich verkleinernden, zweiten Kolbenraum (22) unterteilt, mit mindestens einer im Zylinder (2) angeordneten Feder (25), die den Kolben (24) mit der Stange und dem Verschlussteil (13) in Richtung auf die Sicherheitsstellung des Ventils (1) belastet, mit zwei je ein Steuerventil (441, 451), enthaltenden Entlastungssleitungen (44, 45), die an den beiden Kolbenräumen (21, 22) angeschlossen sind und zu mindestens einer Druckmittelsenke, vorzugsweise der Atmosphäre, führen, mit einer ein Steuerventil (411) enthaltenden ersten Verbindungsleitung (41) zwischen dem Druckbereich des Eintrittsstutzens (11) und dem ersten Kolbenraum (21) und mit einer ein Steuerventil (421) enthaltenden zweiten Verbindungsleitung (42) zwischen dem Druckbereich des Eintrittsstutzens (11) und dem zweiten Kolbenraum (22), dadurch gekennzeichnet, dass eine dritte Verbindungsleitung (43) vorgesehen ist, die mit einem Ende an einen Hohlraumabschnitt angeschlossen ist, der sich vom zylinderseitigen Ende des Steuerventils (411) in der ersten Verbindungsleitung (41) aus über das Innere der ersten Verbindungsleitung (41), den ersten Kolbenraum (21) und das Innere der an diesem Raum angeschlossenen Entlastungsleitung (44) bis zum zylinderseitigen Ende des in dieser Entlastungsleitung befindlichen Steuerventils (41) erstreckt, und dass das andere Ende der dritten Verbindungsleitung (43) am Gehäuse (10) an einer Stelle angeschlossen ist, die - wenn der Kolben (24) die Arbeitsstellung innehat - in den zweiten Kolbenraum (22) und - wenn der Kolben (24) die Sicherheitsstellung innehat - in den ersten Kolbenraum (21) mündet.

2. Ventil nach Anspruch 1, dadurch gekennzeichnet, dass die dritte Verbindungsleitung (43) eine Drosselstelle (431) aufweist.

3. Ventil nach Anspruch 1 oder 2, dadurch gekennzeichnet, dass die dritte Verbindungsleitung (43) im Gehäuse (10) verläuft.

4. Ventil nach Anspruch 2 oder 3, dadurch gekennzeichnet, dass mindestens ein die Drosselstelle (431) aufweisender Abschnitt der dritten Verbindungsleitung (43) in einem von aussen mit dem Gehäuse (10) verbindbaren Wandteil (49) verläuft.

5. Ventil nach einem der Ansprüche 2 bis 4, dadurch gekennzeichnet, dass die am zweiten Kolbenraum (22) angeschlossene Entlastungsleitung (45) eine Drosselstelle (452) aufweist, die mindestens den gleichen Strömungsquerschnitt aufweist wie die Drosselstelle (431) in der dritten Verbindungsleitung (43).

6. Ventil nach einem der Ansprüche 1 bis 5, dadurch gekennzeichnet, dass das andere Ende der dritten Verbindungsleitung (43) in mindestens zwei parallelgeschaltete Zweige aufgeteilt ist, die in der Sicherheitsstellung des Kolbens (24) in den ersten Kolbenraum münden (21).

**Claims**

1. A pressure-medium actuated valve (1) comprising a casing (10) comprising an inlet nozzle (11) connected to a pressure-medium source, an outlet nozzle (12) and a cylinder screened from the valve chamber through which a flow occurs; a closure part (13) disposed in the pressure region of the inlet nozzle (11) and connected by a rod (23) to a piston (24) mounted for movement in the cylinder (2), the piston (24) dividing the cylinder (2) into a first piston chamber (21) which increases in size on transition from a working to a safety position, and a second piston chamber (22) which decreases in size on transition from the working to the safety position; at least one spring (25) disposed in the cylinder (2) and loading the piston (24), the rod (23) and the closure part (13) in the direction towards the safety position of valve (1); two discharge lines (44, 45) each containing a control valve (441, 451) and connected to the two piston chambers and leading to at least one pressure-medium sink, preferably atmosphere; a first connecting line (41) containing a control valve (44) between the first piston chamber (21) and the pressure region of the inlet nozzle (11), and a second connecting line (42) containing a control valve (421) between the pressure region of the inlet nozzle (11) and the second piston chamber (11), characterised in that a third connecting line (43) is provided and connected at one end to a cavity portion extending from the cylinder-side end of the control valve (411) in the first connecting line (41) through the interior of the first connecting line (41), the first piston chamber (21), and the interior of the discharge line (44) connected thereto, to the cylinder-side end of the control valve (441) in line (44), and the other end of the third connecting line (43) is connected to casing (10) at a place which opens into the second piston chamber (22) when piston (24) is in the operating position, and into the first piston chamber (31) when the piston is in the safety position.

2. A valve according to claim 1, characterised in that the third connecting line (43) comprises a restrictor (431).

3. A valve according to claim 1 or 2, characterised in that the third connecting line (43) extends in the casing (10).

4. A valve according to claim 2 or 3, characterised in that at least one portion, comprising the restrictor (431), in the third connecting line (43) extends in a wall part (49) which can be externally connected to the casing (10).

5. A valve according to any of claims 2 to 4, characterised in that the discharge line (45) connected to the second piston chamber (22) has a restrictor (452) which has at least the same flow cross-section as the restrictor (431) in the third connecting line (43).

6. A valve according to any of claims 1 to 5, characterised in that the other end of the third connecting line (43) is divided into at least two parallel-connected branches which open in to the first piston chamber when the piston (24) is in the safety position.

## Revendications

1. Soupape (1) pilotée par un fluide sous pression, comportant un boîtier (10) pourvu d'une tubulure (11) d'entrée reliée à une source de fluide sous pression, d'une tubulure (12) de sortie, et d'un cylindre (2) isolé de la partie de la soupape dans laquelle circule le fluide sous pression, comprenant ensuite un bouchon obturateur (13) disposé dans la partie sous pression de la tubulure (11) d'entrée et relié, par l'intermédiaire d'une tige (23), à un piston (24) coulissant à l'intérieur du cylindre (2), le piston (24) divisant le cylindre (2) en une première chambre (21) de piston, dont le volume augmente lors du passage de la position de travail en position de sécurité, et une deuxième chambre (22) de piston, dont le volume diminue lors du passage de la position de travail en position de sécurité, et comprenant ensuite au moins un ressort (25) disposé dans le cylindre (2), rappelant le piston (24) avec la tige (23) et le bouchon obturateur (13) dans le sens de la position de sécurité de la soupape (1), comprenant ensuite deux conduites (44, 45) de décharge pourvues chacune d'une électrovalve (441, 451) de pilotage et reliées aux deux chambres (21, 22) de piston, conduisant à au moins un milieu détendeur, de préférence à l'atmosphère, comprenant ensuite une première conduite (41) de liaison pourvue d'une électrovalve (411) de pilotage et située entre la partie sous pression de la tubulure (11) d'entrée et la première chambre (21) de piston, et comprenant ensuite une deuxième conduite (42) de liaison pourvue d'une électrovalve (421) de pilotage et située entre la partie sous pression de la tubulure (11) d'entrée et la deuxième chambre (22) de piston, caractérisée par le fait qu'une troisième conduite (43) de liaison est prévue, qui est reliée, d'un côté, à une section de chambre creuse qui s'étend de l'orifice, situé du côté du cylindre, de l'électrovalve (411) de pilotage disposée dans la première conduite (41) de liaison, jusqu'à l'orifice, situé du côté du cylindre, de l'électrovalve (441) de pilotage disposée dans la conduite (44) de décharge, en incluant l'intérieur de la première conduite 41 de liaison, la première chambre (21) de piston et l'intérieur de la conduite (44) de décharge qui est raccordée à celle-ci, et par le fait que la conduite (43) de liaison est reliée, de l'autre côté, au boîtier (10) à un endroit qui-lorsque le piston (24) se trouve en position de travail - débouche dans la deuxième chambre (22) de piston et qui-lorsque le piston (24) se trouve en position de sécurité - débouche dans la première chambre (21) de piston.

2. Soupape selon la revendication 1, caractérisée par le fait que la troisième conduite (43) de liaison est pourvue d'un gicleur (431).

3. Soupape selon la revendication 1 ou 2, caractérisée par le fait que la troisième conduite (43) de liaison est réalisée dans le boîtier (10).

4. Soupape selon la revendication 2 ou 3, caractérisée par le fait qu'au moins une partie de la troisième conduite (43) de liaison, comportant le gicleur (431), est réalisée dans une plaque latérale (19) pouvant être fixée extérieurement au boîtier (10).

5. Soupape selon une des revendications 2 à 4, caractérisée par le fait que la conduite (45) de décharge raccordée à la deuxième chambre (22) de piston comporte un gicleur (452) dont la section de passage est au moins égale à celle du gicleur (431) de la troisième conduite (43) de liaison.

6. Soupape selon une des revendications 1 à 5, caractérisée par le fait que l'autre extrémité de la troisième conduite (43) de liaison est divisée en au moins deux branches parallèles débouchant, lorsque le piston (24) se trouve en position de sécurité, dans la première chambre (21) de piston.

Fig. 2

Fig. 1